# EUROPÄISCHE PATENTANMELDUNG

(11) **EP 0 556 846 A1**
(43) Veröffentlichungstag der Anmeldung: **25.08.1993**
(21) Anmeldenummer: 93102662.9
(22) Anmeldetag: 19.02.1993
(51) Int. Cl.: F01N 3/28, F01N 3/20

(54) **Abgasschalldämpfer für Dieselmotoren insbesondere von Nutzfahrzeugen**

(30) Priorität: 19.02.1992 DE 9202140 U; 22.04.1992 DE 9205461 U
(71) Anmelder: LEISTRITZ AG & CO. Abgastechnik, D-90765 Fürth (DE)
(72) Erfinder: Zachmann, Alfons, W-8510 Fürth 18 (DE); Bartel, Herbert, W-8504 Stein (DE)
(74) Vertreter: Tergau, Enno, Dipl.-Ing.

(57) **Zusammenfassung**

Bei einem Abgasschalldämpfer für Dieselmotoren insbesondere von Nutzfahrzeugen ist innerhalb des Schalldämpfergehäuses 1 ein Abgaskatalysator 2 als Funktionsteil für die Schalldämpfung wirksam.

## Beschreibung

Die Erfindung betrifft einen Abgasschalldämpfer für Dieselmotoren insbesondere von Nutzfahrzeugen.

Durch die im Zuge technischer Weiterentwicklung bessere Nutzung des Dieselöls in Verbindung mit dem Trend zu einer Verringerung seines Schwefelanteils ist der Anteil an Schadstoffen im Abgas rückläufig. Der Anteil an Festkörpern, nämlich Rußpartikeln, und deren Partikelgröße sind im Durchschnitt ebenfalls zurückgegangen. Da der gasförmige Schadstoffanteil weitgehend gleich geblieben ist, hat er prozentual infolge der Rückläufigkeit des Rußanteils zugenommen.

Durch Optimierung des motorischen Verbrennungsverfahrens in Verbindung mit schwefelarmem Dieselkraftstoff ist der Rußpartikelausstoß bei modernen Fahrzeug-Dieselmotoren rückläufig. Dadurch wird es mittelfristig möglich sein, die geltenden Schadstoffgrenzwerte durch nur einen ungeregelten oder durch einen geregelten Abgaskatalysator entsprechend kleinerer Größe einzuhalten.

Der Erfindung liegt die Aufgabe zugrunde, die Abgasschalldämpfung und die für die Einhaltung der geltenden Schadstoffgrenzwerte erforderliche Schadstoffreduzierung in einfacher Weise zu bewerkstelligen. Diese Lösung besteht darin, daß in den Funktionsaufbau des Schalldämpfers ein Abgaskatalysator als Funktionsteil für die Schalldämpfung integriert ist.

Gerade bei Nutzfahrzeugen (LKW und Omnibus) hat diese Lösung den weiteren Vorteil des geringen Raumbedarfs. Bei solchen Nutzfahrzeugen ist nämlich für den Einbau der Abgasanlage vergleichsweise noch weniger Einbauraum vorhanden als bei PKWs. Bei Zugmaschinen mit Sattelauflegern ist besonders notorisch wenig Platz für eine Abgasanlage vorhanden. Zudem sind Nutzfahrzeuge zur Bewältigung immer größerer Aktionsradien bestimmt. Durch entsprechend groß dimensionierte Kraftstofftanks steht immer weniger Raum für die Abgasanlage zur Verfügung.

Anspruch 2 gewährleistet eine besondere Wirksamkeit des Katalysators als Funktionsteil für die Schalldämpfung im Abgasschalldämpfer.

Die Ansprüche 3 und 4 sind auf die Ausgestaltung der verwendbaren Katalysatoren gerichtet.

Für die bauliche Ausgestaltung gibt es prinzipiell unterschiedliche Ausführungsformen. Bei der Ausführungsform nach Anspruch 5 wird eine schnelle Wärmezufuhr am Katalysator erreicht. Daraus resultiert ein schnelles Anspringen des Katalysators. Diese Bauform eignet sich insbesondere für einen fern vom Motor angeordneten Schalldämpfer.

Die Ausführungsform nach Anspruch 6 hingegen eignet sich insbesondere für Motoren mit großen Hubräumen, bei denen das Schalldämpfproblem größer ist als bei Motoren mit kleinem Hubraum. Diese Bauart ist vor allen Dingen für eine motornahe Anbringung des Abgasschalldämpfers bestimmt.

Bei beiden Systemen kann es im Interesse einer raumsparenden Unterbringung der Funktionsteile von Vorteil sein, wenn der Abgasstrom zum Gasaustrittsrohr innerhalb des Schalldämpfergehäuses um etwa 180° entgegengesetzt zum Gaseintrittsrohr umgelenkt wird. Dadurch können die Abgase zum zusätzlichen Aufheizen des Katalysatorträgers bzw. des Katalysators durch Einwirkung auch von außen genutzt werden.

Durch die Ansprüche 8 oder 9 ist eine besonders raumsparende und hinsichtlich der Ausnutzung der Abgaswärme zum zusätzlichen Aufheizen des Katalysators nützliche Ausführungsform geschaffen. Durch die üblicherweise kreisrunde Querschnittsform von Gehäuse- und Katalysatorwand gewinnt der Durchtrittsquerschnitt zwischen der freien Katalysatoraußenwand und der Gehäuseinnenwand eine mondsichelartige Form, die für den Abgasdurchtritt ausreichend und für einen guten Wärmeaustausch vorteilhaft ist.

Eine andere Bauform sieht die Anordnung des Abgaskatalysators zwischen zwei Schalldämpferkammern vor, wobei der Katalysator eine kammerverbindende Rohrstrecke und die Trennwand bildet.

Zweckmäßig ist ein aus einem Keramikträger bestehender Abgaskatalysator zur Integration in den Schalldämpfer mittels Quellmatte oder Drahtgestrick im Schalldämpfergehäuse gelagert.

Der Erfindungsgegenstand ist in den Figuren beispielsweise dargestellt. Es zeigen:
- Fig. 1: einen Längsschnitt durch einen Abgasschalldämpfer mit integriertem Katalysator, der in Durchströmrichtung des Abgases erstes Dämpfungsglied im Funktionsaufbau ist,
- Fig. 2: eine Lösung, bei welcher umgekehrt der Katalysator in Durchströmrichtung des Abgases im Funktionsaufbau nachgeordnetes Dämpfungsglied ist,
- Fig. 3: eine modifizierte Ausführungsform der Lösung gemäß Fig. 2,
- Fig. 4: einen Querschnitt durch das Schalldämpfergehäuse entsprechend der Linie IV-IV in Fig. 3,
- Fig. 5: einen Längsschnitt analog Fig. 1 - 3, bei welchem sich der Katalysator zwischen zwei Schalldämpferkammern befindet, wobei eine gleichbleibende Durchströmrichtung für die Abgase vorliegt,
- Fig.6: die Ausführungsform eines Schalldämpfers mit integriertem Abgaskatalysator kleineren Außendurchmessers,
- Fig. 7: einen Querschnitt entlang der Linie VII-VII in Fig. 6.

Innerhalb des im wesentlichen zylindrischen Gehäuses 1 ist der hinsichtlich seiner Umrißform ebenfalls im wesentlichen zylindrische Abgaskatalysator 2 integriert. Seine Anordnung ist dabei so getroffen, daß er als Funktionsteil für die Schalldämpfung wirksam ist. Der Katalysator 2 ist am Wandteil 3 des Gehäuses 1 befestigt. Die Abgase des Motors werden dem Katalysator 2 vom Gaseintrittsrohr 4 in Durchströmrichtung 5 zugeführt. Unter Beibehaltung der Durchströmrichtung 5 treten die Abgase aus dem Katalysator 2 aus. Am Ende des Gehäuses 1 treten die Abgase in einen Rohrkrümmer 6, vorzugsweise in einen perforierten U-Rohrkrümmer ein. Der Rohrkrümmer 6 und die an ihn auf seiner Konvexseite angrenzende, mit Absorptionsmaterial 24 aus Mineralfaser ausgekleidete Kammer bilden das Dämpfungsteil 19. Im Rohrkrümmer 6 wird der Abgasstrom um 180° in die Gegenrichtung 8 umgeleitet. In dieser Gegenrichtung 8 wird er an der Außenhaut des Katalysatorgehäuses bzw. des Katalysators 2 entlang dem Gasaustrittsrohr 9 zugeführt, welches mit paralleler Achse neben dem Gaseintrittsrohr 4 an einem Stirnende des Schalldämpfergehäuses 1 befestigt ist.

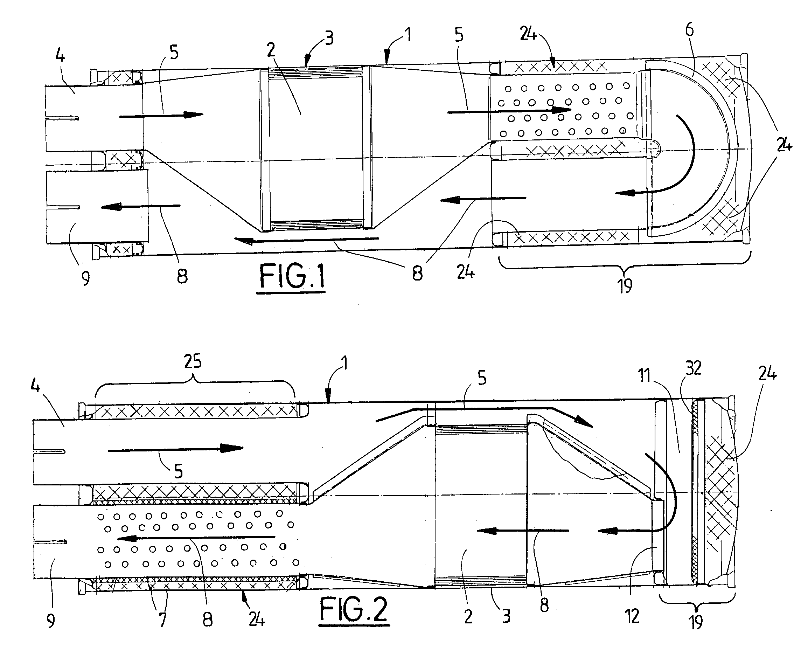

Bei der Ausführungsform gemäß Fig. 2 strömt das Abgas durch das Gaseintrittsrohr 4 ebenfalls zunächst parallel zur Gehäuseachse 10. Es wird dabei zunächst am Mantel des Katalysatorgehäuses bzw. Katalysators 2 bis zu dem verschlossenen anderen Gehäuseende geführt. Das Entlangführen des heißen Abgasstromes in Durchführungsrichtung 5 am Katalysatorgehäuse bzw. am Katalysator 2 entlang begünstigt dessen schnelles Aufheizen. Am anderen Ende des Schalldämpfergehäuses 1 erfährt der noch ungereinigte Abgasstrom eine Umlenkung um 180° im Bereich 11 der Schalldämpferkammer, die analog Fig. 1 stirnseitig mit einem als Schallabsorber ausgebildeten Dämpfungsteil 19 versehen ist. Der umgelenkte Abgasstrom wird durch den Eingangsstutzen 12 in das Katalysatorgehäuse hinein und in Gegenrichtung 8 parallel zur Gehäuseachse 10 durch den Katalysator 2 hindurchgeführt. Das katalytisch gereinigte Abgas strömt dann weiter dem Ausgangsrohr 9 des Systems zu. Das katalytisch gereinigte Abgas verläßt den Katalysatorraum hierfür über einen Ausgangstrichter und wird über das Ausgangsrohr 9 aus dem Schalldämpfer abtransportiert. Das Ausgangsrohr 9 ist innerhalb des Schalldämpfers im Bereich der Dämpfungskammer 25 perforiert. Die Dämpfungskammer 25 ist mit Schallabsorptionsmaterial 24, und zwar innen mit Stahlwolle 30 und außen mit Absorptionsstoff 31 aus Mineralfaser ausgefüllt. Die Relativlage von Eingangsrohr 4 und Ausgangsrohr 9 entspricht bei der Ausführungsform gemäß Fig. 2 der gemäß Fig. 1.

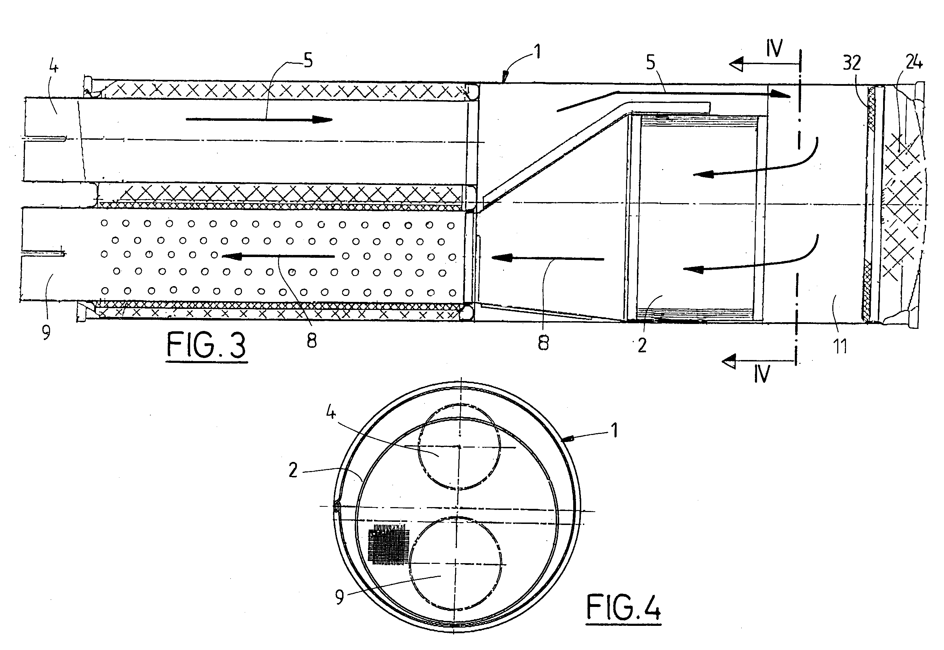

Bei der Ausführungsform gemäß Fig. 3 ist der Katalysator 2 unmittelbar angrenzend an den Umlenkbereich 11 angeordnet. Der Abgasstrom tritt unmittelbar aus dem Umlenkbereich 11 in den Katalysatorkörper 2 ein. Der analog Fig. 2 ausgestaltete und wirksame Dämpfungsteil 19 enthält hier ebenfalls Absorptionsmaterial auf der Innenseite aus Stahlwolle und außen aus Mineralfaser. Er bildet einen gasdurchlässigen, sich über den gesamten Querschnitt des Gehäuses 1 erstreckenden Schallabsorber 32.

Bei den Ausführungsformen gemäß Fig. 1 - 3 ist der Abgasstrom in Durchströmrichtung vor oder hinter dem Katalysator 2 durch trichterartig aufgeweitete oder eingeschnürte Rohrbereiche geführt, die den Durchmesserunterschied zwischen Katalysator 2 und Gaseintritts- bzw. - austrittsrohr 4,9; 17,18 ausgleichen. In diesen Bereichen wirkt der in Form eines Kegelmantels gestaltete Gasführungsquerschnitt als kontinuierlich breitbandig wirkende Reflexionsstelle.

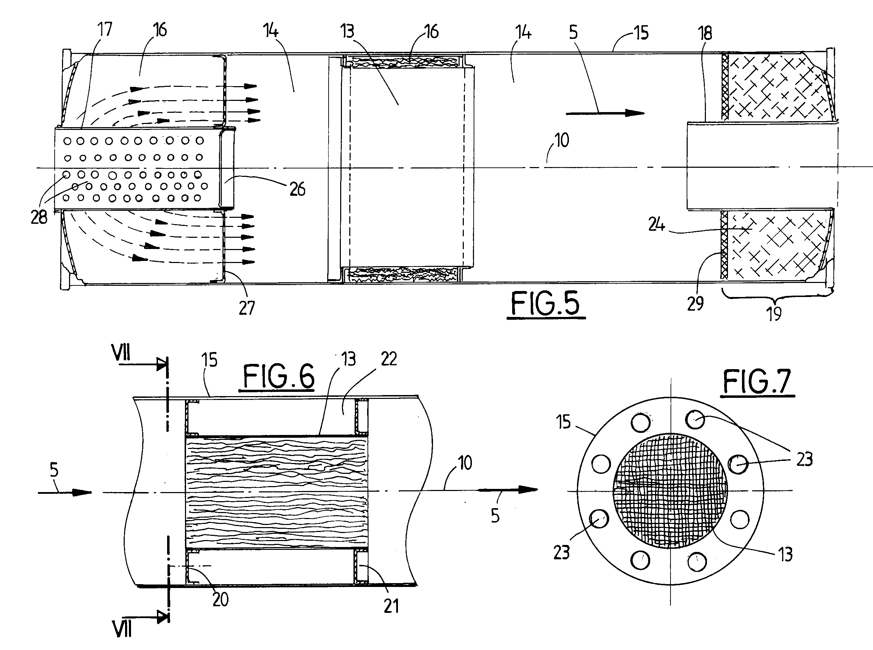

Bei der Ausführungsform gemäß Fig. 5 ist der Abgaskatalysator 13 zwischen den beiden Schalldämpferkammern 14 im Schalldämpfergehäuse 15 angeordnet. Der Katalysator 13 bildet dabei eine die beiden Kammern 14 verbindende Rohrstrecke. Bei dieser Ausführungsform teilt der monolithische Katalysator 13 das Schalldämpfergehäuse 15 in die beiden Kammern 14 auf. Der monolithische Katalysator 13 ist dabei als die Schalldämpferkammer unterteilende Schottwand schalldämmend wirksam. Der Katalysator 13 ist bei dieser Bauform mittels Quellmatte oder Drahtgestrick 16 im Gehäuse 15 gelagert. Das Eingangsrohr 17 ist stirnseitig durch einen Boden 26 verschlossen und in der perforierten Schottwand 27 gelagert. Das Eingangsrohr 17 ist für den Gaseintritt in die Dämpfungskammer mit einem Lochfeld 28 versehen. Der Abgasstrom tritt über die perforierte Schottwand 27 in die Kammer 14 vor dem Katalysator 13, durchströmt ihn und mündet schließlich in die Kammer 14 hinter dem Katalysator. Der Endbereich des Schalldämpfers ist ein Wandresonator und ist mit mineralfaserartigem Absorptionsmaterial 24 ausgefüllt. Bei dieser Ausführungsform verläuft die Durchströmrichtung 5 zwischen Eingangsrohr 17 und Ausgangsrohr 18 parallel zur Gehäuseachse 10.

Fig. 6 ist eine modifizierte Ausführungsform eines Schalldämpfers mit integriertem Abgaskatalysator 13, dessen Außendurchmesser allerdings im Verhältnis zur Ausführungsform gemäß Fig. 5 deutlich kleiner ist als der Durchmesser des Gehäuses 15.

Fig. 7 zeigt eine Monolithanordnung, bei der kein Abgasstrom im Resonatorraum 22 zwischen dem Abgaskatalysator 13 und dem Gehäuse 15 auftritt. Der Resonatorraum 22 ist durch Öffnungen 23 in der Schottwand 20 an das System gekoppelt und als Helmholtz-Resonator wirksam.

### Bezugszeichenliste

- 1.: Gehäuse
- 2.: Katalysator
- 3.: Wandteil
- 4.: Gaseintrittsrohr
- 5.: Durchströmrichtung
- 6.: Rohrkrümmer
- 7.: Quellmatte
- 8.: Gegenrichtung
- 9.: Gasaustrittsrohr
- 10.: Gehäuseachse
- 11.: Bereich
- 12.: Eingangsstütze
- 13.: Abgaskatalysator
- 14.: Kammer
- 15.: Gehäuse
- 16.: Quellmatte
- 17.: Gaseintrittsrohr
- 18.: Gasaustrittsrohr
- 19.: Dämpfungsteil
- 20.: Schottwand
- 21.: Schottwand
- 22.: Resonatorraum
- 23.: Öffnungen
- 24.: Absorptionsmaterial
- 25.: Dämpfungskammer
- 26.: Boden
- 27.: Schottwand
- 28.: Lochfeld
- 29.: Schottwand
- 30.: Stahlwolle
- 31.: Mineralfaser
- 32.: Schallabsorber

## Patentansprüche

1. Abgasschalldämpfer für Dieselmotoren insbesondere von Nutzfahrzeugen,
dadurch gekennzeichnet,
daß innerhalb des Schalldämpfergehäuses (1,15) ein Abgaskatalysator (2,13) als Funktionsteil für die Schalldämpfung wirksam ist.

2. Schalldämpfer nach Anspruch 1,
dadurch gekennzeichnet,
daß der Katalysator (2,13) im Bereich von 2/5 bis 4/5 der Längserstreckung des Schalldämpfergehäuses (1) oder der im Schalldämpfergehäuse (1) durchmessenen Abgaswegstrecke angeordnet ist.

3. Schalldämpfer nach Anspruch 1,
dadurch gekennzeichnet,
daß der für den Katalysator (2) eingesetzte Katalysatorträger von monolithischer Form ist.

4. Schalldämpfer nach mindestens einem der vorhergehenden Ansprüche,
dadurch gekennzeichnet,
daß der Katalysatorträger aus Metall oder Keramik in Wabenform hergestellt ist.

5. Schalldämpfer nach einem oder mehreren der vorhergehenden Ansprüche,
dadurch gekennzeichnet,
daß der Katalysator (2,13) ausgehend vom Gaseintrittsrohr (4,17) an dieses gekoppelt das in Richtung der Abgaswegstrecke erste Dämpfungsglied des Gesamtfunktionsaufbaus ist.

6. Schalldämpfer nach einem der Ansprüche 1 bis 4,
dadurch gekennzeichnet,
daß der Katalysator (2,13) ein in Richtung der Abgaswegstrecke nachgeschaltetes, an das Gasaustrittsrohr (9,18) angekoppeltes Dämpfungsglied des Gesamtfunktionsaufbaues ist.

7. Schalldämpfer nach Anspruch 5 oder 6,
dadurch gekennzeichnet,
daß der Abgasstrom im Gasaustrittsrohr (9) innerhalb des Schalldämpfergehäuses (1) um etwa 180° in Richtung entgegengesetzt zu der des Gaseintrittsrohres (4) umgelenkt ist und daß die ein katalysatorfreies Gasrohr (9 bzw. 4) durchströmenden Abgase zum Aufheizen des Katalysatorträgers bzw. des Katalysators (2) an diesem entlanggeführt sind.

8. Schalldämpfer nach Anspruch 7,
dadurch gekennzeichnet,
- daß das Gehäuse (1) und der Katalysator (2) im wesentlichen eine Zylinderform bzw. eine Zylindermantelform aufweisen,
- daß der Katalysatorquerschnitt kleiner ist als der Gehäusequerschnitt und
- daß der Katalysatormantel in Anlage an einer Gehäuseinnenseite an dieser befestigt ist.

9. Schalldämpfer nach Anspruch 8,
dadurch gekennzeichnet,
daß der Katalysatormantel an der dem Gasaustrittsrohr (9) oder dem Gaseintrittsrohr (4) abgewandten Seite an der Gehäuseinnenseite befestigt ist.

10. Schalldämpfer nach einem oder mehreren der vorhergehenden Ansprüche,
dadurch gekennzeichnet,
daß der Katalysator (13) das Schalldämpfergehäuse (1,15) in mindestens zwei Schalldämpferkammern (14) unterteilt und im Funktionsaufbau des Schalldämpfers die das Gehäuse (1,15) unterteilende Schottwand sowie eine beide Schalldämpferkammern (14) verbindende Rohrstrecke bildet.

11. Schalldämpfer nach einem oder mehreren der vorhergehenden Ansprüche,
gekennzeichnet durch
einen Funktionsaufbau mit integriertem Katalysator (2) in Reflexionsbauweise.

12. Schalldämpfer nach einem der Ansprüche 1 bis 10,
gekennzeichnet durch
eine Funktionsauslegung mit integriertem Katalysator (2) in gemischter Reflexions-/Absorptionsbauweise.

13. Schalldämpfer nach einem der Ansprüche 1 bis 10,
gekennzeichnet durch
einen Funktionsaufbau mit integriertem Katalysator (2) in Absorptionsbauweise.

14. Schalldämpfer nach einem oder mehreren der vorhergehenden Ansprüche,
dadurch gekennzeichnet,
- daß der Katalysator (13), mit kleinerem Querschnitt als das Schalldämpfergehäuse (15) in Schottwänden (20,21) am Gehäuse (15) gelagert ist,
- daß keine Abgase durch den Zwischenraum (22) zwischen Katalysatorkörper (13) und Schalldämpfergehäuse (15) strömen und
- daß Öffnungen (23) in einer gaseintrittsseitigen Schottwand (20) den Zwischenraum (22) an das Abgassystem derart koppeln, daß der Zwischenraum (22) als Helmholtz-Resonator schallenergievernichtend wirksam ist.

15. Schalldämpfer nach einem oder mehreren der vorhergehenden Ansprüche,
dadurch gekennzeichnet,
daß der integrierte Katalysator (2,13) in Monolithform mittels Quellmatte oder Drahtgestrick (7,16) im Schalldämpfergehäuse (1,15) gelagert ist.
